(19) Europäisches Patentamt
European Patent Office
Office européen des brevets

(11) EP 0 517 070 B1

(12) FASCICULE DE BREVET EUROPEEN

(45) Date de publication et mention
de la délivrance du brevet:
**13.11.1996 Bulletin 1996/46**

(51) Int Cl.6: **H01M 4/58, H01M 10/40**

(21) Numéro de dépôt: **92108842.3**

(22) Date de dépôt: **26.05.1992**

(54) **Générateur électrochimique rechargeable à électrolyte liquide et à anode lithium/carbone**

Wiederaufladbare elektrochemische Zelle mit flüssigem Elektrolyt und lithiumhaltiger Kohlenstoff Anode

Rechargeable electrochemical cell with liquid electrolyte and lithiated carbon anode

(84) Etats contractants désignés:
**CH DE ES FR GB IT LI NL SE**

(30) Priorité: **31.05.1991 FR 9106590**

(43) Date de publication de la demande:
**09.12.1992 Bulletin 1992/50**

(73) Titulaire: **ALCATEL ALSTHOM COMPAGNIE GENERALE D'ELECTRICITE**
**F-75382 Paris Cédex 08 (FR)**

(72) Inventeurs:
• **Simon, Bernard**
  **F-75016 Paris (FR)**
• **Boeuve, Jean-Pierre**
  **F-91460 Marcourssis (FR)**

(74) Mandataire: **Weinmiller, Jürgen et al**
**Lennéstrasse 9**
**Postfach 24**
**82336 Feldafing (DE)**

(56) Documents cités:
**EP-A- 0 328 131        EP-A- 0 404 578**
**WO-A-90/13924**

• **PATENT ABSTRACTS OF JAPAN, vol. 13, no. 038 (E-709), 27 janvier 1989**
• **CHEMICAL ABSTRACTS, vol. 110, no. 8, 1988, Columbus, OH (US); H. TANAKA, no. 691098z, HIDEAKI TANAKA:**

Remarques:
Le dossier contient des informations techniques présentées postérieurement au dépôt de la demande et ne figurant pas dans le présent fascicule.

## Description

La présente invention concerne un générateur électrochimique rechargeable à électrolyte liquide et à anode de lithium/carbone.

Malgré des avantages sensibles par rapport aux accumulateurs nickel cadmium (densité d'énergie élevée, faible autodécharge, toxicité réduite), les générateurs électrochimiques à anode de lithium présentent à l'heure actuelle une durée de vie limitée en cyclage qu'il est impératif d'améliorer en vue d'un développement important de ce type de produit.

En raison du caractère extrêmement réducteur du lithium, il se forme sur l'anode par réaction avec l'électrolyte une couche conductrice ionique et passivante. Lors du processus de recharge, le dépôt des ions lithium sous forme métallique présente un caractère dendritique qui est la principale source des défaillances suivantes observées :

- Apparition de courts-circuits par croissance des dendrites ; ces courts-circuits peuvent induire la fusion du lithium et la destruction de l'élément.
- Réactivité accrue de l'électrolyte en raison de la surface spécifique du lithium dendritique déposé. Le rendement en cyclage en est nettement affecté.

Plusieurs voies ont déjà été envisagées afin de résoudre ce problème.

La qualité du dépôt de lithium dépendant fortement des propriétés de la couche de passivation formée avec l'électrolyte, on a essayé d'améliorer la réversibilité de l'électrode en utilisant des solvants spécifiques avec des critères de pureté sévères, ou en exerçant une pression sur l'anode.

Par ailleurs on a proposé de remplacer le lithium métallique par des composés permettant d'intercaler le lithium par réduction à des potentiels proches de celui du lithium métallique. La présence d'une matrice d'accueil doit permettre alors d'éviter le phénomène de croissance dendritique. Les alliages intermétalliques de lithium LiAl, LiSi.. ou certains oxydes de métaux de transition $WO_2$, $Nb_2O_5$ ont été expérimentés dans ce but. De nombreux travaux concernent également les matériaux carbonés capables d'intercaler les ions lithium entre leurs plans graphitiques, solution qui devrait aboutir à une bonne stabilité de l'électrode et une capacité théorique maximale importante de l'anode $LiC_6$, comme l'indique l'article de D. Guérard, A. Herold, paru dans Carbon 13, 1975, p.337.

La demande de brevet européen EP-A- 0357 001 propose un tel matériau carboné, mais il s'avère que sa cinétique d'insertion est trop lente et ne permet une densité de courant de charge que de 0,5 mA/cm$^2$.

Il ressort par ailleurs des publications que, parmi la multiplicité des matériaux carbonés existants, les plus indiqués tant du point de vue de la thermodynamique que de la cinétique d'intercalation sont ceux qui présentent le plus grand degré de cristallinité. On rappelle que le degré de cristallinité dg ou degré de graphitisation d'un matériau carboné est défini à partir de la distance entre les plans graphitiques, qui est de 3.354 Å pour un cristal parfait de graphite :

$$dg = (3.44 - d_{002})/0.086$$

$d_{002}$ étant la distance entre les plans graphitiques obtenue par les moyens de spectroscopie aux rayons X classiques.

D'après la littérature et notamment A. Herold, Material Science and Engineering, 31, 1977, 1, il apparaît que la présence de défauts structuraux augmente la valeur du potentiel d'intercalation par rapport au potentiel du lithium et limite la mobilité des ions dans la structure.

On est donc conduit à utiliser le graphite naturel ou articifiel et certaines fibres, dites de graphite, traitées à haute température, tous ces matériaux présentant un degré de cristallinité élevé (dg supérieur à 0.8) et une taille importante des cristallites. On observe toutefois les phénomènes suivants, lorsque l'on met en oeuvre un matériau carboné à degré de cristallinité élevé :

- Il se produit une exfoliation du matériau carboné qui se traduit par l'apparition d'une capacité irréversible.
- La capacité théorique maximale est difficilement atteinte.

La présente invention a pour but de réaliser un générateur électrochimique dont l'anode de lithium/carbone soit plus performante que les anodes connues.

La présente invention a pour objet un générateur électrochimique rechargeable comprenant une cathode, un électrolyte liquide avec un soluté et au moins un solvant, une anode contenant un matériau carboné très cristallisé avec un degré de cristallinité dg supérieur à 0.8 et capable d'intercaler les ions lithium, caractérisé par le fait que ledit matériau carboné est constitué de grains monophasiques munis superficiellement d'une couche mince imperméable audit solvant de l'électrolyte mais permettant la diffusion du lithium, ladite couche mince étant en carbone plus désordonné que ledit matériau carboné et étant obtenue par dépôt en phase vapeur d' hydrocarbure, par décomposition thermique ou décomposition par plasma ou carbonisation d'une couche de polymère.

Ladite couche mince devient imperméable au solvant par passivation due à la réactivité de l'électrolyte préalablement à l'intercalation massive de lithium.

Ledit matériau carboné de ladite couche mince présente un dg inférieur à 0,8.

Cette couche mince interdit toute intercalation des molécules du solvant responsable de l'exfoliation de l'anode et d'apparition de processus irréversibles. La cinétique d'intercalation du lithium n'est limitée que dans l'épaisseur de la couche, et n'est donc pratiquement pas réduite vis-à-vis de celle du matériau carboné très cristallisé.

Selon un autre mode de réalisation ladite couche mince est en polymère conducteur électronique dopable par le cation Li+, comme par exemple le polyacéthylène.

Selon un autre mode de réalisation ladite couche mince est en un composé d'intercalation du lithium à bas potentiel, par exemple $WO_2$ déposé par CVD.

Le soluté de l'électrolyte d'un générateur selon l'invention est choisi parmi les solutés habituels, avec un anion choisi par exemple parmi $ClO_4^-$, $AsF_6^-$, $BF_4^-$, $PF_6^-$, $CF_3SO_3^-$, $B(C_6H_5)_4^-$, $(CF_3SO_2)_2N^-$.

Le solvant doit présenter une conductivité et un pouvoir mouillant suffisants pour permettre d'optimiser les performances du générateur ; il est choisi notamment parmi le carbonate de propylène, le carbonate d'éthylène, le g-butyrolactone, le tétrahydrofuranne, le 2-méthyl-tétrahydrofuranne, le sulfolane, le diméthylsulfite, le diméthylsulfoxyde, le 1-2 diméthoxyéthane, le diméthylcarbonate, le diéthylcarbonate et leurs mélanges.

La cathode dudit générateur peut être choisie à base d'un matériau choisi parmi les composés d'intercalation du lithium, tels que l'oxyde de vanadium, de chrome, de cobalt, de manganèse, ou parmi les polymères conducteurs électroniques dopés au lithium (polypyrrole, polyaniline).

Selon une variante particulièrement avantageuse, ladite cathode contient un matériau carboné très cristallisé susceptible d'intercaler des anions X⁻ dans la proportion $XC_8$, avec X choisi parmi $AsF_6$, $PF_6$, $BF_4$, $ClO_4$, ledit matériau étant muni superficiellement d'une couche mince imperméable audit solvant.

Ladite couche mince peut être comme pour ladite anode, en carbone plus désordonné que ledit matériau carboné.

Elle peut être également en un polymère conducteur dopable par lesdits anions, choisi par exemple parmi la polyaniline, le polyacétylène, et le polypyrrole.

Une telle cathode présente l'avantage d'être moins chère que les oxydes précités, et non toxique pour l'environnement pendant la fabrication du générateur et après usage.

Un générateur ainsi constitué présente une tension élevée, supérieure à 4 volts.

D'autres caractéristiques et avantages de la présente invention apparaîtront au cours de la description suivante de modes de réalisation donnés à titre illustratif mais nullement limitatif.

Exemple 1

Le générateur selon l'invention est constitué de trois éléments principaux, une anode, un électrolyte, une cathode.

L'anode est fabriquée de la façon suivante :
Du graphite naturel en poudre de granulométrie 50 μm et présentant un dg supérieur à 0.8 est mélangé à une solution de polyacrylonitrile dans du diméthylformamide (5g/l). Par évaporation du solvant, il se forme un dépôt de polyacrylonitrile autour des grains de graphite, dépôt dont l'épaisseur est de l'ordre de 1 μm. Ce dépôt est carbonisé sous azote par traitement thermique à 1200°C. On aboutit donc à des grains de graphite constitués de cristallites d'une même phase, chaque grain étant pourvu en surface d'une couche de carbone plus désordonné que le graphite.

L'électrode est fabriquée par mélange de ce graphite modifié et d'une solution de polyvinylidène fluorine (PVDF) dans le diméthylformamide (10g/l) pour obtenir une pâte de proportions en poids (90/10) de graphite et de PVDF, que l'on presse sur un collecteur de nickel déployé.

L'électrolyte est constitué d'une solution 1M de $LiAsF_6$ dans un mélange de carbonate de propylène, carbonate d'éthylène et 1-2 diméthoxyéthane (PC/EC/2DME).

La cathode est constituée d'un mélange de $LiCoO_2$, de téflon®, de noir de carbone et de graphite, pressé sur un collecteur de titane déployé.

Un tel générateur, limité par la capacité de l'anode, peut être monté à l'air sans précaution particulière. Il présente une capacité en cyclage de 250 mAh par gramme de graphite, pour une densité de courant de 1 mA/cm², et pour des valeurs de potentiel comprises entre 4,2V et 3V.

Exemple 2

La cathode du générateur de cet exemple est à base de graphite modifié en surface par carbonisation de polyacrylonitrile, tel que décrit dans l'exemple 1.
L'électrode plastifiée par du téflon® (graphite 90 % téflon® 10 % en poids) est obtenue en mélangeant la poudre de graphite, un latex de téflon® et de l'éthanol, puis en pressant la pâte obtenue sur un collecteur de titane déployé.

L'anode du générateur est à base de graphite naturel modifié en surface par une couche d'aluminium.
L'électrode non modifiée est obtenue comme pour l'anode de l'exemple 1 avec le plastifiant PVDF. La modification de la surface électroactive est obtenue par électrodéposition de l'aluminium à partir d'une solution de $LiAlH_4$ dans du diéthyléther.

L'électrolyte est une solution de $LiAsF_6$ (1M) dans un mélange de carbonate de propylène, carbonate d'éthylène et diméthylcarbonate (PC/EC/DMC).

Le générateur est monté à l'air à l'état déchargé.

Bien entendu l'invention n'est pas limitée aux modes de réalisation qui viennent d'être décrits. On pourra, sans sortir du cadre de l'invention, remplacer tout moyen par un moyen équivalent.

## Revendications

1. Générateur électrochimique rechargeable comprenant une cathode, un électrolyte liquide avec un soluté et au moins un solvant, une anode contenant un matériau carboné très cristallisé avec un degré de cristallinité dg supérieur à 0.8 et capable d'intercaler les ions lithium, caractérisé par le fait que ledit matériau carboné est constitué de grains monophasiques munis superficiellement d'une couche mince imperméable audit solvant de l'électrolyte mais permettant la diffusion du lithium, ladite couche mince étant en carbone plus désordonné que ledit matériau carboné et étant obtenue par dépôt en phase vapeur d'hydrocarbure, par décomposition thermique ou décomposition par plasma ou carbonisation d'une couche de polymère.

2. Générateur électrochimique selon la revendication 1, caractérisé par le fait que ledit polymère est un polyacrylonitrile.

3. Générateur électrochimique selon l'une des revendications 1 et 2, caractérisé par le fait que ladite cathode contient un matériau carboné très cristallisé susceptible d'intercaler des anions $X^-$ dans la proportion $XC_8$, avec X choisi parmi $AsF_6$, $PF_6$, $BF_4$, $ClO_4$, ledit matériau étant muni superficiellement d'une couche mince imperméable audit solvant.

4. Générateur électrochimique selon la revendication 3, caractérisé par le fait que ladite couche mince est en carbone, plus désordonné que ledit matériau carboné très cristallisé.

5. Générateur électrochimique selon l'une des revendications 3 et 4, caractérisé par le fait que ladite couche mince est en polymère conducteur dopable par lesdits anions.

6. Générateur électrochimique selon la revendication 5, caractérisé par le fait que ledit polymère conducteur est choisi parmi la polyaniline, le polyacéthylène et le polypyrrole.

7. Générateur électrochimique selon l'une des revendications 1 et 2, caractérisé par le fait que ladite cathode est en un composé d'intercalation du lithium, choisi parmi l'oxyde de vanadium, de chrome, de cobalt, de manganèse, et parmi les polymères conducteurs électroniques dopés au lithium, tels que la polyaniline et le polypyrrole.

8. Générateur électrochimique selon l'une des revendications précédentes, caractérisé par le fait que ledit soluté de l'électrolyte comprend un anion choisi parmi $ClO_4^-$, $AsF_6^-$, $BF_4^-$, $PF_6^-$, $CF_3SO_3^-$, $B(C_6H_5)_4^-$.

9. Générateur électrochimique selon l'une des revendications précédentes, caractérisé par le fait que ledit solvant de l'électrolyte est choisi parmi le carbonate de prolylène, le carbonate d'éthylène, la g-butyrolactone, le tétrahydrofuranne, le 2-méthyl-tétrahydrofuranne, le sulfolane, le diméthylsulfite, le diméthysulfoxyde, le 1-2 diméthoxyéthane, le diméthylcarbonate, le diéthylcarbonate et leurs mélanges.

## Patentansprüche

1. Wiederaufladbarer elektrochemischer Generator, der eine Kathode, einen flüssigen Elektrolyten mit einem gelösten Stoff und mindestens einem Lösungsmittel und eine Anode aufweist, die ein stark kristallisiertes kohlenstoffhaltiges Material mit einer Kristallreinheit dg höher als 0,8 aufweist und die die Lithiumionen einfügen kann, dadurch gekennzeichnet, daß das kohlenstoffhaltige Material aus monophasigen Körnern besteht, die an der Oberfläche mit einer dünnen, für das Lösungsmittel des Elektrolyten undurchdringlichen, aber die Lithiumdiffusion erlaubenden Schicht versehen sind, wobei diese dünne Schicht aus einem ungeordneteren Kohlenstoff als das kohlenstoffhaltige Material besteht und durch Aufbringen von Kohlenwasserstoff in der Dampfphase, durch Wärmezersetzung oder durch Plasmazersetzung oder Karbonisierung einer Polymerschicht erhalten wird.

2. Elektrochemischer Generator nach Anspruch 1, dadurch gekennzeichnet, daß das Polymer ein Polyacrylonitril ist.

3. Elektrochemischer Generator nach einem der Ansprüche 1 und 2, dadurch gekennzeichnet, daß diese Kathode ein stark kristallisiertes kohlenstoffhaltiges Material enthält, das $X^-$-Anionen im Anteil $XC_8$ einfügen kann, wobei X aus $AsF_6$, $PF_6$, $BF_4$, $ClO_4$ ausgewählt wird und das Material an der Oberfläche mit einer dünnen Schicht bedeckt ist, die für das Lösungsmittel undurchlässig ist.

4. Elektrochemischer Generator nach Anspruch 3, dadurch gekennzeichnet, daß die dünne Schicht aus Kohlenstoff ist, der ungeordneter ist als das stark kristallisierte kohlenstoffhaltige Material.

5. Elektrochemischer Generator nach einem der Ansprüche 3 und 4, dadurch gekennzeichnet, daß die dünne Schicht aus einem leitenden Polymer ist, das mit den Anionen dotiert werden kann.

6. Elektrochemischer Generator nach Anspruch 5, dadurch gekennzeichnet, daß das leitende Polymer aus Polyanilin, Polyacethylen und Polypyrrol ausgewählt wird.

7. Elektrochemischer Generator nach einem der Ansprüche 1 und 2, dadurch gekennzeichnet, daß die Kathode eine Einfügungsverbindung des Lithium ist, die aus Vanadiumoxid, Chromoxid, Kobaltoxid, Manganoxid und den mit Lithium dotierten elektronenleitenden Polymeren wie Polyanilin und Polypyrrol ausgewählt wird.

8. Elektrochemischer Generator nach einem der vorhergehenden Ansprüche, dadurch gekennzeichnet, daß der gelöste Stoff des Elektrolyten ein Anion aufweist, das ausgewählt wird aus $ClO_4^-$, $AsF_6^-$, $BF_4^-$, $PF_6^-$, $CF_3SO_3^-$, $B(C_6H_5)_4^-$.

9. Elektrochemischer Generator nach einem der vorhergehenden Ansprüche, dadurch gekennzeichnet, daß das Lösungsmittel des Elektrolyten ausgewählt wird aus Propylenkarbonat, Äthylenkarbonat, g-Butyrolacton, Tetrahydrofuran, 2-Methyl-Tetrahydrofuran, Sulfolan, Dimethylsulfit, Dimethylsulfoxid, 1-2-Dimethoxyäthan, Dimethylkarbonat, Diethylkarbonat und ihren Mischungen.

**Claims**

1. A rechargeable electrochemical cell comprising a cathode, a liquid electrolyte with a solute and at least one solvent, an anode containing a highly crystallized carbon-containing material with a degree of crystallinity dg greater than 0.8 and capable of intercalating lithium ions, said electrochemical cell being characterized by the fact that said carbon-containing material is made up of single-phase grains, the surface of each grain being provided with a thin layer which is impermeable to said electrolyte solvent, but which allows lithium to be diffused, said thin layer being made of carbon that is more random than said carbon-containing material, and being obtained by vapor deposition of hydrocarbon, by thermal decomposition or plasma decomposition, or by carbonization of a layer of polymer.

2. An electrochemical cell according to claim 1, characterized by the fact that said polymer is a polyacrylonitrile.

3. An electrochemical cell according to claim 1 or 2, characterized by the fact that said cathode contains a highly crystallized carbon-containing material capable of intercalating anions $X^-$ in the proportion $XC_8$, with X being chosen from $AsF_6$, $PF_6$, $BF_4$, and $ClO_4$, the surface of said material being provided with a thin layer impermeable to said solvent.

4. An electrochemical cell according to claim 3, characterized by the fact that said thin layer is made of carbon which is more random than said highly crystallized carbon-containing material.

5. An electrochemical cell according to claim 3 or 4, characterized by the fact that said thin layer is made of a conductive polymer which can be doped with said anions.

6. An electrochemical cell according to claim 5, characterized by the fact that said conductive polymer is chosen from polyaniline, polyacetylene and polypyrrol.

7. An electrochemical cell according to claim 1 or 2, characterized by the fact that said cathode is made of a lithium intercalation compound chosen from oxides of vanadium, chromium, cobalt, and manganese, and from lithium doped electron-conducting polymers such as polyaniline and polypyrrol.

8. An electrochemical cell according to any preceding claim, characterized by the fact that said electrolyte solute comprises an anion chosen from $ClO_4^-$, $AsF_6^-$, $BF_4^-$, $PF_6^-$, $CF_3SO_3^-$, and $B(C_6H_5)_4^-$.

9. An electrochemical cell according to any preceding claim, characterized by the fact that said electrolyte solvent is chosen from propylene carbonate, ethylene carbonate, g-butyrolactone, tetrahydrofuran, 2-methyl tetrahydrofuran, sulfolane, dimethylsulfite, dimethylsulfoxide, 1-2 dimethoxyethane, dimethylcarbonate, diethylcarbonate and mixtures thereof.